# DEMANDE DE BREVET EUROPEEN

(11) **EP 4 414 538 A2**
(43) Date de publication de la demande: **14.08.2024**
(21) Numéro de dépôt: 24186271.3
(22) Date de dépôt: 19.07.2023
(51) Int. Cl.: F01N 3/20

(54) **COMPOSITION AQUEUSE POUR LE TRAITEMENT DES GAZ D ÉCHAPPEMENT À PROPRIÉTÉS AMÉLIORÉES**

(30) Priorité: 19.07.2022 FR 2207392
(62) Demande divisionnaire de: 23186542.9
(71) Demandeur: TotalEnergies OneTech, 92400 Courbevoie (FR)
(72) Inventeur: CASTILLO, VERONICA, 69360 SOLAIZE (FR)
(74) Mandataire: Casalonga

(57) **Abrégé**

La présente invention a pour objet une composition aqueuse dépourvue de paraffines, comprenant :
- au moins un agent réducteur des oxydes d'azote NOx et/ou au moins un précurseur d'un tel agent, et
- au moins un additif choisi parmi les mono-esters d'acides gras comportant de 12 à 22 atomes de carbone et de sorbitan polyoxyéthylénés, en une teneur totale de 10 à 1500 ppm en masse, par rapport à la masse totale de la composition.

La présente invention a également pour objet l'utilisation d'une telle composition pour le traitement des gaz d'échappement à la sortie des moteurs à combustion interne, ainsi qu'un procédé de traitement des gaz d'échappement issus d'un moteur à combustion interne mettant en oeuvre cette composition.

## Description

La présente invention concerne une composition pour le traitement des gaz d'échappement à la sortie des moteurs thermiques embarqués ou stationnaires, que les moteurs soient des moteurs pour véhicules lourds tels que les poids lourds, les véhicules de transport, les véhicules non routiers dits « Off Road » tels que les engins agricoles, les bateaux, ou des moteurs pour véhicules légers et/ou utilitaires ou encore des moteurs pour des applications industrielles stationnaires. Elle concerne également l'utilisation d'une telle composition dans tout dispositif de traitement des gaz d'échappement, ainsi qu'un procédé de traitement des gaz d'échappement mettant en oeuvre cette composition.

### ETAT DE L'ART ANTERIEUR

Les normes européennes en matière de pollution émises par les moteurs thermiques, notamment ceux alimentés par des carburants de type gazole, en particulier les normes applicables aux véhicules poids lourds, ont conduit les constructeurs de moteurs à mettre en place des systèmes de post-traitement des gaz d'échappement. Ces systèmes incluent les technologies SCR (Sélective Catalytic Réduction ou réducteur catalytique sélectif en français), EGR (Exhaust Gas Recirculation ou recirculation de gaz d'échappement en français), DOC (Diesel Oxydation Catalyst ou catalyseur d'oxydation en français), FAP (filtres à particules) et SCRF^{®} (un SCR combiné avec un FAP). Ces différents systèmes de post-traitement peuvent être installés seuls ou en combinaison dans la mesure où ils n'agissent pas toujours sur les mêmes polluants présents dans les gaz d'échappement.

Pour répondre aux normes, en particulier européennes (normes Euro IV et suivantes pour les poids lourds et Euro 6 pour les véhicules légers), la plupart des constructeurs européens de véhicules automobiles ont opté pour le post-traitement SCR à l'échappement de leurs moteurs. Ce post-traitement agit exclusivement sur la diminution des oxydes d'azote présents dans les gaz. Un autre avantage de cette technique est qu'elle permet, par des réglages optimisés du moteur, une réduction sensible de la consommation du carburant, en particulier par rapport à d'autres systèmes de post-traitement comme les pièges à NOx.

Le post-traitement SCR consiste à réduire les oxydes d'azote NO et NO₂ (couramment dénommés NOx) sur un dispositif catalytique qui permet de les mettre en contact avec un agent réducteur. Ce dispositif contient un catalyseur comprenant un support généralement à base de zéolithes échangées au fer ou au cuivre. Ce catalyseur favorise la réduction des NOx en azote, par réaction avec l'agent réducteur. Un agent réducteur classique est par exemple l'ammoniac (NH₃). Pour introduire de l'ammoniac gazeux dans le système de traitement des gaz d'échappement, il est connu de le produire directement dans la conduite acheminant ces gaz au système SCR en vaporisant une solution aqueuse d'un précurseur de cet agent réducteur tel que par exemple l'urée. La solution d'urée, injectée à une température moyenne d'échappement généralement de 150 à 400°C, libère de l'ammoniac grâce à des réactions successives de thermolyse et d'hydrolyse. D'autres composés précurseurs de l'ammoniac peuvent être employés dans des conditions similaires. Un injecteur est usuellement employé pour introduire la solution aqueuse d'urée dans la conduite acheminant les gaz d'échappement au catalyseur SCR, en amont de celui-ci. Un mixer ou mélangeur, installé entre cet injecteur et le catalyseur SCR, peut être utilisé pour améliorer la vaporisation du spray de solution aqueuse d'urée dans le flux de gaz d'échappement. Un exemple de mixer est décrit dans le document SAE 2015-01-1020 (« Advanced Close Coupled SCR Compact Mixer Architecture », Michelin J. et al.).

Deux exemples classiques, mais non limitatifs, de configuration de la ligne de post-traitement SCR sont décrits ci-après. La première, dite configuration « underfloor » ou « sous-plancher », consiste à placer le dispositif de post-traitement SCR en aval du moteur, sous le plancher du véhicule (généralement à plus de 50 cm à 1 m de la sortie de la chambre de combustion). Elle présente l'avantage de pouvoir installer le dispositif de post-traitement dans une zone ou beaucoup d'espace est disponible et ainsi le placer dans des conditions de géométrie plus favorables à une vaporisation de la solution aqueuse d'urée. Une autre configuration dite « close-coupled », consiste à placer le dispositif de post-traitement SCR à proximité immédiate du moteur (généralement à moins de 50 cm de la sortie de la chambre de combustion). Par rapport à la configuration dite « underfloor », cette configuration présente l'avantage de bénéficier de températures plus élevées dans le catalyseur SCR, améliorant son amorçage et son efficacité. En revanche, son inconvénient est que l'espace disponible est plus réduit qu'en configuration « underfloor », ce qui implique que l'injecteur de solution aqueuse d'urée soit placé plus près du mixer et du catalyseur SCR. Cette configuration peut conduire à une moins bonne vaporisation de la solution aqueuse d'urée. Les documents SAE 2014-01-1522 (« Control of a Combined SCR on Filter and Under-Floor SCR System for Low Emission Passenger Cars", Balland J. et al.) et SAE 2015-01-0994 ("Next Génération All in One Close-Coupled Urea-SCR System", Kojima H. et al.), ou encore WO2014060987A1 décrivent ces deux types de configuration.

Dans certaines configurations d'installation du dispositif SCR et de l'injection de précurseur d'ammoniac, en particulier dans le cas de l'injection d'urée, les constructeurs ont constaté l'apparition de dépôts dans les conduites d'échappement situées entre l'injecteur et le dispositif SCR. Ces dépôts peuvent être suffisamment importants pour provoquer une obturation partielle voire totale du conduit d'échappement liée à la contre pression à l'échappement et créer ainsi des pertes en puissance du moteur. A configuration d'injection constante, la quantité de dépôts formés est plus grande à basses températures qu'à hautes températures. Ces dépôts, selon les analyses qui ont été faites dans la publication technique SAE 2016-01-2327, sont de nature variable selon la température à laquelle ils ont été formés. Ainsi, aux températures inférieures à 250-300°C, ils sont constitués majoritairement d'urée cristallisée, et sont constitués majoritairement d'acide cyanurique au-delà de 300°C. L'acide cyanurique peut se sublimer et produire à nouveau de l'ammoniac gazeux. Toutefois, cette réaction ne peut se produire qu'à très haute température, supérieure à 450°C. Une telle température est rarement atteinte à cet endroit dans les conduites d'échappement.

On a constaté notamment que ces dépôts étaient présents dans les conduites présentant des coudes du fait du manque de place dans le véhicule, et lorsque la distance séparant l'injection d'urée et le premier coude est trop courte, comme dans les configurations « close-coupled » décrites précédemment. L'hypothèse formulée est que dans ce type de configuration, une partie des gouttes d'urée n'a pas le temps de se vaporiser et de se décomposer totalement en ammoniaque gazeux. Les gouttes d'urée se déposent sur la paroi du conduit qui est à une température trop basse pour permettre la décomposition complète en ammoniaque gazeux, et elles ne se décomposent que partiellement en formant des dépôts d'acide cyanurique collés à la paroi. Par ailleurs, on a également constaté qu'en fonction de la configuration de la ligne SCR et de la température, l'urée était susceptible de cristalliser dans la ligne, avec pour conséquence une obstruction de la ligne (voir document SAE 2017-26-0132 (« A Study on the Factors Affecting the Formation of Urea Crystals and Its Mitigation for SCR After-Treatment Systems », Jain A. et al.).

La demande WO2008/125745 décrit une solution aqueuse comprenant un composé susceptible de libérer de l'ammoniac gazeux au-dessus de 200°C et au moins un additif polyfonctionnel dont la HLB varie de 7 à 17 pour limiter la formation des dépôts à base d'acide cyanurique dans un dispositif de post-traitement des gaz d'échappement, notamment de type SCR. Les additifs polyfonctionnels mis en oeuvre sont notamment des éthers d'alcools gras polyalcoxylés et des esters d'alcools gras polyalcoxylés.

La demande EP2337625 décrit un mélange de tensioactifs permettant de réduire le diamètre des gouttelettes d'une solution aqueuse d'urée, et ainsi favoriser sa vaporisation et la transformation de l'urée en ammoniac gazeux dans un système SCR. La solution proposée consiste en un mélange d'alcools gras polyalcoxylés, avec des degrés d'alcoxylation contrôlés.

La demande EP2488283 décrit des additifs pour solution d'urée, du type alcools gras polyalcoxylés particuliers. Ces additifs sont également destinés à favoriser une réduction de la formation des dépôts issus de la décomposition de l'urée dans les systèmes SCR.

Le brevet US 5,453,257 enseigne la réduction de la teneur en oxydes d'azote dans les effluents de combustion d'un carburant carboné par l'introduction dans lesdits effluents d'une émulsion d'un composé réducteur des oxydes d'azote et d'un composé hydrocarboné présentant une température d'ébullition inférieure à celle de l'agent réducteur des oxydes d'azote.

De plus, il a été constaté que les solutions aqueuses de précurseur d'ammoniac contenant des tensioactifs ont tendance à mousser. Ce moussage se produit notamment lors du transport et de la manutention de la solution, par exemple lors de son déchargement dans les cuves de stockage, puis lorsque la composition est introduite depuis une cuve de stockage dans le réservoir d'un véhicule, ce qui complique l'opération de remplissage du réservoir et peut entraîner son débordement. L'utilisation courante de pistolets lors de la distribution de la composition favorise également son moussage. En outre, le moussage de la composition lorsqu'il se produit au moment de son injection dans le système de traitement des gaz d'échappement du véhicule peut entraîner l'introduction d'une quantité plus ou moins importante d'air dans ledit système. Ce phénomène perturbe le contrôle de la quantité de solution injectée et affecte l'efficacité du système de traitement.

Une solution à ce problème consiste à ajouter un ou plusieurs agents anti-mousse à la solution aqueuse. Mais de tels additifs représentent souvent une efficacité qui diminue au cours du temps de stockage de la composition avant son utilisation, d'autant plus vite lorsque la composition est stockée à des températures relativement élevées, supérieures à 30°C voire à 35 ou 40 °C. Dans de telles conditions de stockage, la composition ne peut généralement pas être conservée plus de quelques mois (en moyenne 5 mois), ce qui s'avère très contraignant.

Il subsiste donc le besoin de pouvoir formuler des compositions pour le traitement des gaz d'échappement sous forme de solutions aqueuses à base d'un agent réducteur des NOx, par exemple d'ammoniac, ou d'un précurseur d'un tel agent réducteur, comme l'urée, qui présentent des propriétés optimisées. On attend de cette composition qu'elle soit capable d'éviter ou de réduire les dépôts lors de l'utilisation sur une ligne SCR, tout en réduisant autant que possible, voie en évitant les phénomènes de moussage. On attend également de cette composition qu'elle soit stable dans le temps, c'est-à-dire qu'elle conserve ses propriétés sur des périodes longues de stockage, y compris à température élevée.

La Demanderesse a découvert que ces objectifs étaient atteints en ajoutant à la composition aqueuse au moins un additif particulier choisi parmi des esters spécifiques d'acides gras et de sorbitan polyoxyéthylénés tels que définis ci-après.

La présente invention a ainsi pour objet une composition aqueuse comprenant :
(1) au moins un agent réducteur des oxydes d'azote NOx et/ou au moins un précurseur d'un tel agent, et
(2) au moins un additif choisi parmi les mono-esters d'acides gras comportant de 12 à 22 atomes de carbone et de sorbitan polyoxyéthylénés, en une teneur totale de 10 à 1500 ppm en masse par rapport à la masse totale de la composition.

Cette composition ne contient pas de paraffines.

La présente invention a également pour objet l'utilisation d'une telle composition pour le traitement des gaz d'échappement à la sortie des moteurs à combustion interne embarqués ou stationnaires, plus particulièrement pour le traitement des gaz d'échappement dans un dispositif de réduction catalytique sélective des oxydes d'azote.

Le moteur peut être en particulier choisi parmi les moteurs Diesel, les moteurs à allumage commandé (incluant les moteurs essence et les moteurs GNV ou gaz naturel pour véhicules), et les moteurs à carburation mixte notamment gazole-gaz. De préférence, le moteur est un moteur Diesel.

La présente invention s'applique à tout type de moteur susceptible d'émettre des oxydes d'azote, incluant les moteurs embarqués et les moteurs stationnaires. L'invention s'applique, entre autres, tant à des moteurs marins, moteurs de poids lourds, de véhicules de transport, d'engins de chantiers ou d'engins agricoles tels que par exemple des tracteurs, qu'à des moteurs de véhicules légers et utilitaires, ainsi qu'à des moteurs employés dans des applications industrielles stationnaires.

Par dispositif de réduction catalytique sélective des oxydes d'azote, on désigne un dispositif connu en soi sous la dénomination dispositif SCR pour « Sélective Catalytic Réduction » en anglais. Un tel dispositif comprend un catalyseur de Réduction Catalytique Sélective (également désigné catalyseur SCR).

L'invention concerne également un procédé de traitement des gaz d'échappement issus d'un moteur à combustion interne, de préférence un moteur Diesel, équipé d'un dispositif de réduction catalytique sélective des oxydes d'azote, ce procédé étant caractérisé en ce qu'il comporte au moins une étape d'introduction d'une composition telle que définie ci-dessus dans la conduite qui achemine les gaz d'échappement de la sortie du moteur vers ledit dispositif de réduction catalytique sélective.

Dans ce qui suit, on désigne également par ligne d'échappement SCR ou ligne SCR, de manière connue en soi, la conduite qui achemine les gaz d'échappement de la sortie d'un moteur vers un dispositif de réduction catalytique sélective (dispositif SCR).

La composition selon l'invention présente de nombreux avantages : elle est utilisable de la même façon et dans les mêmes équipements que les solutions de l'art antérieur. Elle est au moins aussi efficace, voire plus efficace, que les solutions de l'art antérieur, notamment les solutions à base d'urée dans la réduction ou la prévention de la formation de dépôts dans les systèmes SCR, en particulier dans les configurations dites « close-coupled ». Elle n'entraîne pas ou très peu de moussage lors de sa manipulation, son utilisation, son transfert et/ou son transport, par exemple lors des opérations de transvasement ou de remplissage de contenants tels que les bidons, les réservoirs de véhicule, les cuves de stockage ou les cuves de transport. Elle permet notamment d'éviter les débordements lors du remplissage du réservoir de stockage d'un véhicule. Elle permet également de remplir les cuves de stockage et les réservoirs des véhicules plus rapidement, et dans ce dernier cas en limitant les à-coups des pistolets de remplissage.

Cette composition permet en outre un contrôle précis de la quantité de composition injectée, et permet notamment d'éviter les erreurs liées à la mise en défaut des capteurs par la mousse.

La composition selon l'invention est stable au stockage. Elle présente également des performances antimousses maintenues dans le temps, notamment sur des périodes pouvant aller jusqu'à un an, sur une large gamme de températures de stockage, allant de 5°C à 40°C.

D'autres objets, caractéristiques, aspects et avantages de l'invention apparaîtront encore plus clairement à la lecture de la description et des exemples qui suivent.

Dans ce qui va suivre, et à moins d'une autre indication, les bornes d'un domaine de valeurs sont comprises dans ce domaine, notamment dans les expressions « compris entre » et « allant de ... à ... ».

Par ailleurs, les expressions « au moins un » et « au moins » utilisées dans la présente description sont respectivement équivalentes aux expressions « un ou plusieurs » et « supérieur ou égal ».

Enfin, de manière connue en soi, on désigne par composé ou groupe en C_{N} un composé ou un groupe contenant dans sa structure chimique N atomes de carbone.

### DESCRIPTION DETAILLEE

### L'agent réducteur et/ou le précurseur d'un tel agent

La composition utilisée dans l'invention comprend au moins un agent réducteur des oxydes d'azote et/ou au moins un précurseur d'un agent réducteur des oxydes d'azote (1).

Par « agent réducteur des oxydes d'azote », on entend un composé capable de réduire au moins partiellement, sinon en totalité, les oxydes d'azote (également dénommés NOx pour désigner les composés NO et NO₂) en azote, dans les conditions classiques de fonctionnement d'une ligne SCR, c'est à dire en présence d'un catalyseur SCR et à une température allant de 150 à 400°C. Parmi les agents réducteurs des NOx, on peut citer tout particulièrement l'ammoniac (NH₃).

Par « précurseur d'un agent réducteur des NOx » on entend un composé susceptible de libérer un agent réducteur des NOx sous l'effet de la température et/ou par réaction catalytique.

Parmi les précurseurs d'ammoniac, on peut citer l'urée qui par réactions successives de thermolyse et d'hydrolyse produit de l'ammoniac selon un procédé bien connu. La ligne d'échappement SCR peut comprendre, en amont du système catalytique SCR, un catalyseur dont la fonction est de transformer un précurseur d'un agent réducteur des NOx en agent réducteur des NOx, notamment en ammoniac gazeux.

De préférence, l'agent réducteur ou le précurseur de l'agent réducteur est choisi dans la liste constituée par l'urée, l'ammoniaque, le formamide, les sels d'ammonium, notamment le formiate d'ammonium, le carbamate d'ammonium, et les sels de guanidine, notamment le formiate de guanidinium ; et de préférence dans la liste constituée par l'urée et l'ammoniaque.

Selon un mode de réalisation préféré, on utilise de l'urée, qui est un précurseur d'agent réducteur. En effet, l'urée présente l'avantage d'être stable, non volatile, non explosive et non inflammable. Elle peut être transportée sans risque, stockée et manipulée par un opérateur sans formation spécifique.

Dans ce mode de réalisation, la composition présente une teneur en urée allant, de préférence, de 25% à 42% en masse, plus préférentiellement de 30% à 40% en masse, encore plus préférentiellement de 31 à 35% en masse et mieux encore de 32% à 33% en masse, par rapport à la masse totale de la composition. De manière particulièrement préférée, la composition contient de l'urée à une teneur de 32,5 ± 0,7% en masse, en accord avec les spécifications de la norme ISO 22241-1.

Selon une variante particulièrement préférée de ce mode de réalisation, la solution aqueuse selon l'invention est préparée à partir du produit commercialisé sous la marque déposée AdBlue^{®}, qui est une solution aqueuse d'urée à 32,5 ± 0,7% en masse. Le terme AdBlue^{®} est utilisé dans la présente description pour désigner indifféremment les produits commerciaux bien connus sous les dénominations suivantes : AdBlue^{®}, DEF, AUS32, ARLA32. Par extension, on entend sous cette dénomination l'ensemble des produits à base d'urée en solution aqueuse dont le produit commercialisé sous la dénomination AUS40 qui correspond à une solution aqueuse d'urée à environ 40% en masse et est essentiellement destinée aux moteurs marins.

Toutefois, il entre également dans la portée de la présente invention d'utiliser des compositions aqueuses contenant de l'urée de concentration supérieure à 32,5%, qui peuvent être ensuite diluées juste avant mise en oeuvre. Cette variante permet de réaliser des économies lors du transport de ces compositions à base d'urée.

Les mono-esters d'acides gras et de sorbitan polyoxyéthylénés La composition selon l'invention contient au moins un additif (2) choisi parmi les mono-esters d'acides gras comportant de 12 à 22 atomes de carbone et de sorbitan polyoxyéthylénés.

Ces esters sont avantageusement choisis parmi ceux ayant une HLB allant de 12 à 17, et plus préférentiellement de 12,5 à 16,5. Par HLB, on désigne de manière connue en soi la balance hydrophile/lipophile dudit composé, déterminée selon la méthode définie par Griffin.

De préférence, le ou les acide(s) gras desdits mono-esters (2) sont des mono-acides linéaires, saturés ou mono-insaturés. Comme indiqué précédemment, ces acides gras comprennent de 12 à 22 atomes de carbone. Plus préférentiellement, ils comprennent de 12 à 20 atomes de carbone, et plus préférentiellement encore de 12 à 18 atomes de carbone. Les acides laurique, myristique, palmitique et oléique sont préférés. L'acide laurique et l'acide oléique sont particulièrement préférés.

Lesdits mono-esters (2) comprennent avantageusement un nombre moyen d'unités oxyéthylène (dénommées unités OE, de formule -CH₂-CH₂-O-) compris dans la gamme allant de 10 à 30, et de préférence de 15 à 25, et plus préférentiellement de 20.

Des mono-esters (2) particulièrement préférés sont choisis parmi le mono-laurate de sorbitan polyoxyéthyléné à 20 OE, le mono-oléate de sorbitan polyoxyéthyléné à 20 OE et leurs mélanges. Le mono-laurate de sorbitan polyoxyéthyléné à 20 OE est particulièrement préféré.

Ces composés sont couramment disponibles dans le commerce.

Le ou les mono-esters (2) sont présents à une teneur totale de 10 à 1500 ppm en masse, de préférence de 50 à 1000 ppm en masse et mieux encore de 200 à 800 ppm en masse, par rapport à la masse totale de la composition.

### Les additifs anti-mousse

Selon un mode de réalisation préféré, la composition selon l'invention comprend en outre un ou plusieurs additif(s) anti-mousse, de préférence choisi(s) parmi les polymères de polydiméthylsiloxanes greffés.

De manière préférée, le ou les additif(s) anti-mousse sont choisi(s) parmi les copolymères comprenant un squelette polydiméthylsiloxane avec un nombre moyen d'unités diméthylsiloxane compris dans la gamme de 150 à 300, greffé par des chaînes polyoxyalkylène.

Ces copolymères sont donc des polymères greffés, avec un squelette polydiméthylsiloxane et des chaînes latérales (ou greffons) polyoxyalkylène greffées sur le squelette.

Le squelette de ces polymères est constitué d'une chaîne polydiméthylsiloxane (également couramment dénommée PDMS), c'est à dire une chaîne de formule -[Si(CH₃)₂-O]ₙ-, avec n un nombre compris dans la gamme allant de 150 à 300.

De préférence, le squelette polydiméthylsiloxane comprend un nombre moyen d'unités diméthylsiloxane compris dans la gamme de 180 à 250. Ceci correspond à une valeur du nombre n compris dans la gamme de 180 à 250.

Les chaînes polyoxyalkylène répondent avantageusement à la formule -(RO)ₘ- avec R désignant un ou plusieurs groupements alkylènes en C1 à C4, ramifié ou linéaire, de préférence en C2 ou C3, et m un nombre compris dans la gamme allant de 10 à 55.

De préférence, le nombre moyen m d'unités oxyalkylène est compris dans la gamme allant de 20 à 50, plus préférentiellement de 30 à 50.

De manière également préférée, R désigne un ou plusieurs groupements alkylènes en C2 et/ou C3, et de manière plus préférée les chaines polyoxyalkylène sont choisies parmi les polyoxyéthylène (EO) de formule -(CH₂-CH₂-O)ₘ- , les polyoxypropopylènes (PO) de formule -(CH₂-CH(CH₂)-O)ₘ-, et les chaines formées de motifs oxyéthylène et de motifs oxypropylène (EO/PO).

Selon un mode de réalisation particulièrement préféré, les chaines polyoxyalkylène sont formées de motifs oxyéthylène (EO) et de motifs oxypropylène (PO). De préférence, le rapport du nombre moyen d'unités EO sur le nombre moyen d'unités PO est compris dans la gamme allant de 0,2 à 2, de préférence de 0,3 à 1,3. De préférence, ces chaines sont formées de blocs polyoxyéthylène et de blocs polyoxypropylène.

Le taux de greffage des copolymères (c'est-à-dire la proportion moyenne en nombre de motifs diméthylsiloxane portant une chaine latérale polyoxyalkylène) est avantageusement compris dans la gamme allant de 0,5% à 5%, de préférence de 1% à 2%.

Sauf indication contraire expresse, toutes les moyennes mentionnées dans la présente description sont des moyennes en nombre.

Selon un mode de réalisation préféré, les copolymères constituant l'additif anti-mousse sont réticulés. Une telle réticulation leur confère une structure tridimensionnelle.

Le ou les additif(s) anti-mousse peuvent être avantageusement présent(s) à une teneur totale allant de 1 à 200 ppm en masse, de préférence de 2 à 100 ppm en masse, plus préférentiellement de 3 à 50 ppm en masse, mieux de 5 à 25 ppm en masse et mieux encore de 10 à 15 ppm en masse, par rapport à la masse totale de la composition.

Les copolymères décrits ci-dessus sont connus en soi, et disponibles commercialement.

Dans les produits commerciaux, ces copolymères peuvent en particulier se présenter sous forme diluée, dans un mélange les contenant.

Dans ce cas, la teneur en copolymère(s) de tels mélanges est généralement comprise dans la gamme allant de 10 à 80% en masse, de préférence de 20 à 60% et masse, plus préférentiellement de 30 à 50% en masse et mieux encore de 35 à 45% en masse.

Ainsi selon un mode de réalisation, le ou les additif(s) anti-mousse sont utilisés en mélange avec un oxyde inorganique, tel que par exemple de la silice hydrophobe solide.

Selon un autre mode de réalisation, le ou les additif(s) anti-mousse sont utilisés en mélange avec un ou plusieurs agents émulsifiants, qui peuvent être en particulier choisis parmi les polymères polyoxyalkylène tels que décrits ci-avant, et plus préférentiellement des copolymères EO/PO. Ces polymères proviennent généralement de la synthèse du copolymère et correspondent à une proportion de chaînes polyoxyalkylène non greffées sur le squelette polydiméthylsiloxane.

Selon un mode de réalisation particulièrement préféré, le ou les additif(s) anti-mousse sont utilisés en mélange avec un oxyde inorganique et un agent émulsifiant, tel que notamment avec de la silice hydrophobe et un ou plusieurs polymère(s) polyoxyalkylène tel que décrit ci-avant.

Les produits commerciaux contenant le ou les additifs anti-mousse peuvent se présenter sous forme d'un produit solide, notamment anhydre (c'est-à-dire dépourvu d'eau), ou sous forme de solution dans un solvant qui peut être l'eau ou un solvant organique.

### Les tensioactifs additionnels

La composition selon l'invention peut comprendre en outre un ou plusieurs tensioactifs additionnels, différents des mono-esters d'acides gras comportant de 12 à 22 atomes de carbone et de sorbitan polyoxyéthylénés décrits ci-avant. Ces tensioactifs peuvent être en particulier choisis parmi les tensioactifs ioniques, non-ioniques, ou amphotères, solubles dans l'eau.

Les tensioactifs ioniques peuvent être choisis parmi les tensioactifs cationiques et les tensioactifs anioniques, et de préférence parmi les tensioactifs cationiques. Ces derniers comprennent généralement un groupement azoté cationique ou ionisable sous forme cationique. Ils peuvent être notamment choisis parmi les alkylamines et les alkylammonium linéaires, les diamines linéaires, les hétérocycles aromatiques ou saturés contenant un ou plusieurs atomes d'azote, les composés cycliques de type imidazole, les étheramines et les étheramides, les oxyamines et éthoxyamines, pris seuls ou en mélange.

Les tensioactifs amphotères peuvent être notamment choisis parmi les aminoacides et leur dérivés imides ou amides, pris seuls ou en mélange.

Les tensioactifs non ioniques sont de préférence choisis parmi les composés suivants :
a) les éthers d'hydrocarbyle et de mono ou de polyalkylène glycol,
b) les éthers d'hydrocarbyle et de polyol,
c) les esters d'acide gras et de mono ou de polyalkylène glycol,
d) les esters d'acide gras et de mono ou de polyglycérol,
e) et les mélanges de ces composés.

Par « hydrocarbyle », on désigne un groupement choisi parmi un alkyle, un alcényle, un alcynyle, un aryle, un aryle-alkyle ou « aralkyle » ; avantageusement l'hydrocarbyle est un groupement en Ci-C₅₀.

Par « alkyle en Cᵢ-Cⱼ » on entend une chaîne hydrocarbonée saturée, linéaire, ramifiée ou cyclique, comprenant de i à j atomes de carbone.

Par « alcényle en Cₓ-C_{y} », on entend une chaîne hydrocarbonée, linéaire, ramifiée ou cyclique comportant au moins une double liaison carbone-carbone, et comprenant de x à y atomes de carbone.

Par « alcynyle en Cₓ-C_{y} », on entend une chaîne hydrocarbonée linéaire, ramifiée ou cyclique comportant au moins une triple liaison carbone-carbone, et comprenant de x à y atomes de carbone.

Par « aryle en Cₓ-C_{y} », on entend un groupe fonctionnel qui dérive d'un composé hydrocarboné aromatique comprenant de x à y atomes de carbone. Ce groupe fonctionnel peut être monocyclique ou polycyclique. A titre illustratif, un aryle en C₆-C₁₈ peut être le phényle, le naphtalène, l'anthracène, le phénanthrène et le tétracène.

Par « aralkyle en Cₓ-C_{y} », on entend un composé hydrocarboné aromatique, de préférence monocyclique, substitué par au moins une chaîne alkyle linéaire ou ramifiée et dont le nombre total d'atomes de carbone du cycle aromatique et de ses substituants va de x à y atomes de carbone. A titre illustratif un aralkyle en C₇-C₁₈ peut être choisi dans le groupe formé par le benzyle, le tolyle et le xylyle.

Par polyol, on entend au sens de la présente invention un composé hydrocarboné oxygéné comprenant au moins deux fonctions alcool. Les polyols peuvent éventuellement contenir une ou plusieurs autres fonctions oxygénées, comme par exemple une fonction acétal, un pont éther, un groupement ester.

Par acide gras, on désigne de manière connue en soi un acide carboxylique comprenant une chaine alkyle ou alcényle linéaire ou ramifiée en C₄-C₃₀, de préférence en C₈-C₃₀.

### a) Les éthers d'hydrocarbyle et de mono ou de polyalkylène glycol

Les éthers d'hydrocarbyle et de mono ou de polyalkylène glycol peuvent être des mono éthers ou des diéthers, selon que la chaine polyalkylène glycol est substituée sur une ou deux extrémités par un groupement hydrocarbyle.

Les éthers d'hydrocarbyle et de mono ou de polyalkylène glycol sont avantageusement choisis parmi ceux comprenant un groupement hydrocarbyle en C₁-C₅₀ et de 1 à 60 unités alkylène glycol.

Les éthers d'hydrocarbyle et de mono ou de polyalkylène glycol sont plus préférentiellement choisis parmi les composés suivants :
- les monoéthers d'hydrocarbyle mono- ou poly-alcoxylés de formule (I) : R-(Y)ₙ-OH ;
- les di-éthers d'hydrocarbyle mono- ou poly-alcoxylés de formule (II) : R-(Y)ₘ-OR' ;
- les di-éthers d'hydrocarbyle mono- ou poly-alcoxylés de formule (III) : HO-(Y)ₙ-R"-(Y')ₘ-OH ;
- et les mélanges de ces composés.

Dans les formules (I) à (III) ci-avant R et R' représentent indépendamment des groupements alkyle ou alcényle ou alcynyle ou aryle ou aralkyle en C₃-C₄₀ ; R" représente un groupement alcane diyle ou alcène diyle ou alcyne diyle ou un di-radical aryle ou un di-radical aralkyle en C₃-C₄₀.

Pour faciliter la description, on emploiera dans la suite la même désignation de radical alkyle ou alcényle ou alcynyle ou aryle ou aralkyle pour un mono radical (R, R') et pour un di-radical (R").

Dans les formules (I) à (III) ci-avant Y et Y' sont des groupements choisis indépendamment l'un de l'autre parmi les groupes suivants: -(O-CH₂-CH₂)-, -(O-CH(CH₃)-CH₂)- et -(O-CH₂-CH₂-CH₂)-.

Dans un même composé de formule (I), (II) ou (III), les groupements Y, respectivement Y', peuvent être tous identiques ou peuvent être différents. Par exemple, -(Y)ₙ- peut représenter un copolymère à motifs oxyde d'éthylène et oxyde de propylène, comme par exemple un copolymère à blocs.

De préférence, dans les formules (I) à (III), les groupements Y, respectivement Y', sont tous identiques.

De façon encore préférée, dans les formules (I) à (III), les groupements Y, respectivement Y', sont tous l'oxyde d'éthylène de formule -(O-CH₂-CH₂)-.

Dans les formules (I) à (III) ci-avant n, m représentent le degré d'alcoxylation de la molécule, et désignent indépendamment l'un de l'autre un nombre entier allant de 1 à 60, avantageusement de 1 à 30, encore mieux de 1 à 20. Plus préférentiellement, n et m varient de 3 à 15, encore mieux de 5 à 12.

Avantageusement, dans la formule (III) les groupements Y et Y' représentent -(O-CH₂-CH₂)- et n=m.

Selon un premier mode de réalisation, dans les formules (I), (II) et (III), avantageusement R, R' et R" sont choisis parmi les groupes alkyle et alcényle, linéaires ou ramifiées, de préférence linéaires.

Encore plus avantageusement, R, R' et R" sont choisis parmi les groupes alkyles en C₅-C₃₂, plus préférentiellement en C₈-C₃₀.

Les composés de formule (I) peuvent être tout particulièrement choisis parmi les alcools gras linéaires ou ramifiés polyalcoxylés comprenant de 4 à 30 atomes de carbone, de préférence 8 à 30 atomes de carbone, mieux 10 à 24 atomes de carbone ; et de 5 à 12 motifs oxyde d'éthylène et/ou oxyde de propylène, de préférence oxyde d'éthylène.

Parmi les composés de formule (I) disponibles commercialement on peut citer les produits de la gamme Marlipal^{®} et ceux de la gamme Surfaline^{®}.

Selon un second mode de réalisation, dans les formules (I), (II) et (III), R, R' et R" sont choisis parmi les alcynyles en C₄-C₅₀.

Avantageusement, ce mode de réalisation concerne la formule (III), dans laquelle R" est un alcynyle en C₄-C₅₀.

Par exemple, selon ce mode de réalisation, le composé de formule (III) peut être représenté par la formule (IV) ci-dessous : 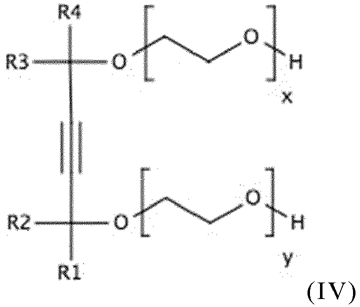 dans laquelle R1, R2, R3, R4 représentent indépendamment les uns des autres H ou un groupe alkyle en C₁-C₂₀ et x et y représentent indépendamment l'un de l'autre un nombre entier allant de 1 à 60, de préférence de 1 à 30.

Un exemple d'un produit commercial répondant à cette formule est le Surfynol 104^{®} commercialisé par la société Air Products.

Selon un troisième mode de réalisation, dans les formules (I), (II) et (III), R, R' et R" sont choisis parmi les groupes aralkyles comprenant de 9 à 30 atomes de carbone.

De préférence, ce mode de réalisation concerne la formule (I), dans laquelle R représente un groupement choisi parmi les aralkyles comprenant de 9 à 30 atomes de carbone.

De manière plus préférée, R est choisi parmi les para-alkylphényles comprenant un groupement alkyle en C₁-C₂₄, plus préférentiellement en C₃-C₂₀, et mieux encore en C₅-C₁₈.

Selon ce mode de réalisation, le composé de formule (I) peut être représenté par la formule (V) ci-dessous : 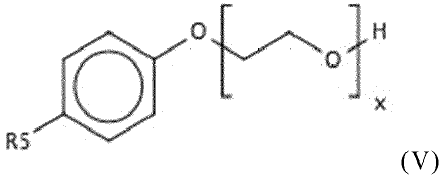 dans laquelle R5 représente un groupement alkyle en C₁-C₂₄, de préférence en C₃-C₂₀, mieux encore en C₅-C₁₈, et x représente un nombre entier allant de 1 à 50, de préférence de 1 à30.

Un exemple d'un tel composé est le produit Dynol 800^{®} commercialisé par la société Air Products, qui répond à la formule suivante :

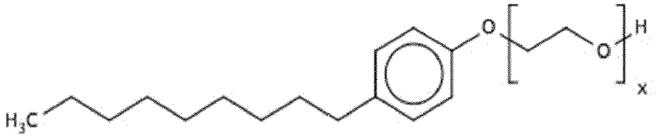

Les composés de formule (I) peuvent être avantageusement des mélanges obtenus par réaction d'alcools R-OH avec n unités d'oxyde d'éthylène et/ou d'oxyde de propylène. n représente le nombre de moles d'oxyde d'alkylène que l'on a fait réagir avec une mole d'alcool R-OH.

Les composés de formule (II) peuvent être avantageusement des mélanges obtenus par réaction de composés alcools R-OH avec m unités d'oxyde d'éthylène et/ou d'oxyde de propylène suivis d'une réaction d'étherification avec un composé alcool R'-OH. m représente le nombre de moles d'oxyde d'alkylène que l'on a fait réagir avec une mole d'alcool R-OH.

Les composés de formule (III) peuvent être avantageusement obtenus par réaction d'un diol HO- R"-OH avec (n+m) unités d'oxyde d'éthylène et/ou d'oxyde de propylène. Avantageusement dans la formule (III) : n=m. (m+n) représente le nombre de moles d'oxyde d'alkylène que l'on a fait réagir avec une mole de diol HO-R"-OH.

Les composés de formule (I), (II) et (III) sont généralement sous forme de mélanges de composés présentant des degrés d'alcoxylation variés.

### b) Les éthers d'hydrocarbyle et de polyols

Les éthers d'hydrocarbyle et de polyols sont avantageusement choisis parmi les éthers issus d'un alcool comportant un groupe alkyle ou alcényle en C₁-C₅₀, de préférence en C₃-C₄₀, plus avantageusement en C₅-C₃₂, encore mieux en C₈-C₃₀, et d'un polyol.

Les polyols auxquels il est ici fait référence sont différents des mono et des polyalkylène glycols.

Avantageusement, selon une première variante, le polyol est choisi parmi les composés appartenant à la famille des glucides et leurs oligomères. En particulier, le polyol est choisi parmi les composés glucidiques cycliques, comme par exemple les oligomères de glucopyranose. L'invention concerne notamment les éthers d'hydrocarbyle et de polyglucoside cyclique.

Parmi les éthers d'hydrocarbyle et de polyglucoside cyclique on peut citer les alkyl polyglucosides tels que le produit commercialisé sous le nom Triton CG650^{®} par la société Dow Chemical.

Avantageusement, selon une seconde variante, le polyol est le glycérol ou un oligomère de glycérol, par exemple un oligomère comprenant 2 à 30 unités glycérol, de préférence de 3 à 20 unités glycérol.

### c) Les esters d'acide gras et de mono ou de polyalkylène glycol

Les esters d'acides gras et de mono ou de polyalkylène glycol sont des molécules résultant de la condensation d'au moins un acide gras avec 1 à 60 unités alkylène glycol, préférentiellement 1 à 50 unités alkylène glycol. Avantageusement, ils sont issus de la réaction d'un acide gras avec 1 à 50 unités éthylène glycol.

Les acides gras sont généralement des molécules comprenant une chaine alkyle ou alcényle, porteuse à son extrémité d'une fonction acide carboxylique, et comprenant 4 à 30 atomes de carbone, de préférence en 8 à 30 atomes de carbone, plus avantageusement 8 à 24 atomes de carbone.

Le groupement acide gras peut être une molécule unique ou un mélange correspondant à la distribution en acides gras d'une huile animale ou végétale.

Parmi les acides gras, on peut citer de façon non limitative, un acide gras saturé tel que l'acide n-caproïque, l'acide caprylique, l'acide n-caprique, l'acide laurique, l'acide myristique, l'acide palmitique, l'acide stéarique, l'acide isostéarique, l'acide arachidique ou un acide gras insaturé tel que l'acide palmitoléique, l'acide oléique, l'acide linoléique, l'acide linolénique, l'acide arachidonique ou l'acide docosahexaénoïque.

Les esters d'acides gras et de mono ou de polyalkylène glycol comprennent avantageusement de 3 à 50, encore mieux de 5 à 40 unités oxyde d'alkylène. Encore mieux, les esters d'acides gras et de mono ou de polyalkylène glycol comprennent de 3 à 50, avantageusement de 5 à 40 unités oxyde d'éthylène.

Comme exemples d'esters d'acides gras et de polyalkylène glycols on peut citer le produit DUB S PEG 30S (stéarate de PEG-30) commercialisé par la société Stéarinerie Dubois.

### d) Les esters d'acide gras et de mono ou de polyglycérol

Les esters d'acides gras et de mono ou de polyglycérol sont des molécules résultant de la condensation d'au moins un acide gras avec 1 à 60 unités alkylène glycol, préférentiellement 1 à 50 unités glycérol.

Les acides gras sont identiques à ceux décrits au point c) ci-dessus.

Les esters d'acides gras et de mono ou de polyglycérol comprennent avantageusement de 3 à 50, encore mieux de 5 à 40 unités glycérol.

Comme exemples d'esters d'acides gras et de polyglycérol on peut citer le produit Polyaldo 10-1-0 KFG^{®} (laurate de polyglycérol) commercialisé par la société LONZA.

Selon un mode de réalisation préféré, le ou les tensioactifs sont choisis parmi les tensioactifs non ioniques. On préfère tout particulièrement employer un ou plusieurs tensioactifs choisis parmi les éthers d'hydrocarbyle et de mono ou de polyalkylène glycol, et plus préférentiellement parmi les monoéthers d'hydrocarbyle mono- ou poly-alcoxylés de formule (I) :
R-(Y)ₙ-OH, dans laquelle :
R représente un groupement alkyle, alcényle ou alcynyle en C₃-C₄₀, de préférence en C₈-C₃₀, encore plus préférentiellement en C₁₀-C₂₄ ;
Y est choisi parmi : -(O-CH₂-CH₂)-, -(O-CH(CH₃)-CH₂)- et -(O-CH₂-CH₂-CH₂)- ; et de préférence Y désigne -(O-CH₂-CH₂)- ;
n est un nombre entier allant de 1 à 60, de préférence de 1 à 30, plus préférentiellement de 1 à 20, mieux de de 3 à 15, encore mieux de 5 à 12.

La teneur totale du des tensioactifs additionnels, lorsqu'ils sont présents, peut aller de 5 à 10 000 ppm en masse, de préférence de 50 à 5 000 ppm en masse, plus préférentiellement de 100 à 2 500 ppm en masse, et mieux encore de 200 à 1000 ppm en masse, par rapport à la masse totale de la composition.

### Les autres constituants

La composition aqueuse peut en option contenir un ou plusieurs autres composés, différents des agents réducteurs des oxydes d'azote- et de leurs précurseurs, des mono-esters d'acides gras et de sorbitan, des additifs anti-mousse et des tensioactifs additionnels décrits ci-avant.

La composition peut ainsi comprendre, de manière non limitative, un ou plusieurs fluides organiques de préférence miscibles à l'eau tels que par exemple des alcools, des polyols, et/ou un ou plusieurs composés métalliques.

Selon un mode de réalisation préféré, la composition selon l'invention ne comprend pas de composé(s) métallique(s).

Par composé métallique, on désigne tout composés, organique ou inorganique, comprenant un ou plusieurs métaux. Ces composés peuvent être ionique ou non ioniques. En particulier, la composition ne comprend pas de composés organométalliques ni de composés métalliques inorganiques, qu'ils soient ioniques ou non ioniques.

Des exemples de composés ioniques exclus selon ce mode de réalisation sont notamment les composés comprenant un ou plusieurs métaux choisis parmi les métaux suivants : Fe, Cu, Ni, Co, Zn, Mn, Mg, Ti, V, Sr, Pt, Ce, Ca, Li, Na, et Nb.

Par « ne contenant pas de composés métallique », on entend que la composition ne contient pas de tels composés volontairement ajoutés. Ainsi, si de tels composés sont présents dans la composition, ils sont considérés comme des impuretés et la teneur en chaque élément métallique apporté par ledit ou lesdits composés métalliques est inférieure à 1 ppm en masse, en particulier inférieure à 0,5 ppm en masse, par rapport à la masse totale de la composition.

La composition selon l'invention est dépourvue de paraffines. Par paraffines, on désigne des alcanes de formule CₙH₂ₙ₊₂, avec n un nombre entier allant de 2 à 50, de préférence de 6 à 40, plus préférentiellement de 18 à 35. Par « ne contenant pas de paraffines », on entend que la composition ne contient pas de paraffines volontairement ajoutées. Ainsi, si de telles paraffines sont présentes dans la composition, elles sont considérées comme des impuretés et leur teneur est inférieure à 80 ppm en masse, de préférence inférieure à 50 ppm en masse, mieux inférieure à 20 ppm en masse et mieux encore inférieure à 10 ppm en masse, par rapport à la masse totale de la composition.

Selon un mode de réalisation préféré, la composition selon l'invention ne comprend pas de phase liquide hydrocarbonée. En particulier, la composition ne comprend pas de phase liquide hydrocarbonée insoluble dans l'eau, y compris sous forme dispersée (émulsion huile-dans-eau).

Par phase liquide, on désigne une phase qui se trouve à l'état liquide 25°C et à pression atmosphérique (1,013.10⁵ Pa).

Par insoluble dans l'eau, on désigne une phase dont la solubilité dans l'eau à 25°C et à pression atmosphérique (1,013.10⁵ Pa) est inférieure à 2% en poids, et de préférence inférieure à 1% en poids, encore plus préférentiellement inférieure à 0,5% en poids.

En particulier, la composition selon l'invention ne se présente pas sous forme d'une émulsion. Par émulsion, on désigne de manière connue en soi une composition comprenant au moins deux phases liquides, l'une des phases étant dispersée sous forme de gouttelettes dans l'autre phase.

### La composition et ses modes de réalisation

La composition utilisée dans la présente invention est une composition aqueuse, c'est-à-dire que son composant principal est l'eau. La teneur en eau de la composition est de préférence comprise dans la gamme allant de 50 à 90% en masse, de préférence de 60 à 80% en masse, et mieux encore de 65 à 70% en masse, par rapport à la masse totale de la composition.

La composition peut être préparée de manière usuelle par mélange de ses constituants, de préférence à température ambiante, typiquement dans une plage de température allant en général de 10 à 60°C.

Selon un mode de réalisation préféré, la composition aqueuse est préparée à partir d'une solution aqueuse préformulée d'urée, comme par exemple une composition commerciale connue sous le nom d'AdBlue^{®} comprenant 32,5% massique d'urée.

Un premier mode de réalisation consiste à ajouter le ou les mono-ester(s) d'acides gras et de sorbitan polyoxyéthyléné(s) (2) et le ou les additif(s) anti-mousse optionnel(s) à cette solution aqueuse préformulée d'urée, en quantité requise pour atteindre les teneurs définies ci-avant.

Un second mode de réalisation consiste à ajouter à cette solution aqueuse préformulée d'urée une composition aqueuse concentrée d'urée additivée. Selon ce mode de réalisation, la composition aqueuse concentrée d'urée additivée comprend le ou les mono-ester(s) d'acides gras et de sorbitan polyoxyéthyléné(s) (2) et le ou les additif(s) anti-mousse optionnel(s) à des teneurs très supérieures à celle de la composition aqueuse finale introduite dans la ligne SCR, dans une solution aqueuse d'urée, de préférence à une teneur de 32,5% massique d'urée. Le mélange des deux compositions en un ratio approprié pour obtenir les teneurs finales souhaitées est réalisé juste avant l'injection dans la ligne SCR.

Les mêmes modes de réalisation peuvent être mis en oeuvre à partir d'une solution aqueuse préformulée d'un autre précurseur que l'urée.

### L'utilisation

La composition aqueuse selon l'invention est utilisée pour traiter les gaz d'échappement d'un moteur à combustion interne dans un dispositif de réduction catalytique sélective des oxydes d'azote ou dispositif SCR.

A cet effet, elle est introduite dans la ligne d'échappement SCR, en aval du moteur et en amont du dispositif SCR. Cette introduction est typiquement réalisée en pompant la composition à partir d'un ou plusieurs réservoirs et en l'injectant au moyen d'un ou plusieurs injecteurs, qui permettent de pulvériser la composition dans le flux des gaz d'échappement. Ces dispositifs sont connus en soi.

L'utilisation selon l'invention permet également de prévenir ou réduire les dépôts dans la conduite qui achemine les gaz d'échappement de la sortie d'un moteur à combustion interne vers ledit dispositif de réduction catalytique sélective.

Ces dépôts sont typiquement des dépôts de composés azotés, contenant le ou les agent(s) réducteur(s) des oxydes d'azote et/ou leur(s) précurseur(s), et/ou des produits de décomposition desdits précurseurs. L'invention permet tout particulièrement de prévenir et/ou de réduire les dépôts, notamment les dépôts d'urée et/ou d'acide cyanurique, et plus particulièrement les dépôts d'acide cyanurique dans la conduite d'échappement SCR.

Comme indiqué ci-avant, l'invention permet de réduire ou d'éviter ces dépôts quelle que soit la conformation de la ligne SCR. L'invention est particulièrement, mais non limitativement, adaptée pour les lignes d'échappement SCR dites « close-coupled » et « underfloor » telles que décrites ci-avant.

En particulier, l'invention permet de réduire de tels dépôts, tout en évitant les phénomènes de moussage de la composition.

Comme exposé ci-avant la composition injectée dans la ligne SCR est pompée à partir d'un ou plusieurs réservoirs de stockage classiques, connus en soi.

Selon une première variante, tous les composants de la composition selon l'invention, notamment le ou les agent(s) réducteur(s) des oxydes d'azote et/ou leur(s) précurseur(s) (1), le ou les mono-ester(s) d'acides gras et de sorbitan polyoxyéthyléné(s) (2) et le ou les additif(s) anti-mousse optionnel(s) sont formulés dans une même composition aqueuse aux teneurs souhaitées, et cette composition est introduite dans un unique réservoir.

Selon une seconde variante, on formule une première composition aqueuse intermédiaire comprenant le ou les agent(s) réducteur(s) des oxydes d'azote et/ou leur(s) précurseur(s) (1), aux teneurs souhaitées dans la composition finale résultant du mélange des deux compositions intermédiaires. Cette première composition intermédiaire est introduite dans un premier réservoir. On formule également une seconde composition aqueuse intermédiaire concentrée additivée, comprenant le ou les agent(s) réducteur(s) des oxydes d'azote et/ou leur(s) précurseur(s) (1) aux teneurs souhaitées dans la composition finale résultant du mélange des deux compositions intermédiaires, ainsi que le ou les mono-ester(s) d'acides gras et de sorbitan polyoxyéthyléné(s) (2) et le ou les additif(s) anti-mousse optionnel(s) en teneur plus concentrée que la teneur souhaitée dans ladite composition finale.

Cette seconde composition est introduite dans un second réservoir, distinct du premier réservoir. Les deux réservoirs alimentent un même système d'injection, permettant le mélange des deux compositions intermédiaires. Un véhicule comprenant deux réservoirs pour la mise en oeuvre d'une telle variante est décrit notamment dans EP2541012.

### Le procédé

Le procédé (ou méthode) selon l'invention permet de traiter les gaz d'échappement issus d'un moteur à combustion interne, de préférence un moteur Diesel, équipé d'un système SCR.

Ce procédé comprend une étape d'introduction d'une composition aqueuse telle que décrite ci-dessus dans la conduite acheminant les gaz d'échappement en sortie d'un moteur vers un dispositif de réduction catalytique sélective des oxydes d'azote. Cette introduction est typiquement réalisée en pompant la composition à partir d'un ou plusieurs réservoirs et en l'injectant dans ladite conduite au moyen d'un ou plusieurs injecteurs, comme décrit ci-avant.

Les exemples ci-après sont donnés à titre d'illustration de l'invention, et ne sauraient être interprétés de manière à en limiter la portée.

### EXEMPLES

### Compositions testées :

On a utilisé comme composition de base une solution aqueuse commerciale à 32,5% massique d'urée AdBlue^{®}, conforme à la norme ISO 22241. Cette composition de base est dénommée C0.

Les additifs suivants ont été ajoutés :
- A1 : mono-laurate de sorbitan polyoxyéthyléné à 20 OE ;
- A2 : mono-oléate de sorbitan polyoxyéthyléné à 20 OE:
- A3 : copolymère réticulé comprenant un squelette PDMS avec un nombre moyen d'unités diméthylsiloxane de 200, greffé par des chaînes formées de blocs polyoxyéthylène et de blocs polyoxypropylène ayant un nombre moyen d'unités OE = 16 et un nombre moyen d'unités OP = 30 ; Taux de greffage de 1,57% ; ce copolymère se présente sous forme d'un mélange contenant en outre de la silice hydrophobe et des copolymères OE/OP, contenant 40% en masse dudit copolymère .

Des compositions additivées C1 à C4 ont été préparées, en ajoutant à la composition C0 les additifs définis ci-avant, avec les teneurs détaillées dans le tableau 1 ci-dessous (teneurs indiquées en ppm en masse de matière active, par rapport à la masse totale de la composition).

**[Table 1]**

| Additif | C1 | C2 | C3 | C4 |
|---|---|---|---|---|
| A1 | 500 | | 500 | |
| A2 | | 500 | | 500 |
| A3 | | | 5 | 5 |

### Test de détermination de la quantité de dépôts :

La capacité de réductions de dépôts des compositions additivées C1 à C4 en comparaison avec la composition de référence C0 a été évaluée en utilisant le système ECTO-Lab^{™} (« Exhaust Composition Transient Operation Laboratory^{™}»). Ces essais ont été réalisés dans les laboratoires du South West Research Institute (SwRI, San Antonio, Texas, USA). Le système possède en outre un dispositif de catalyseur d'oxydation et filtre à particules (dispositif dit « DOC/DPF » de l'anglais « Diesel Oxydation Catalyst/Diesel Particle Filter » en amont de l'injecteur pour enlever des suies issues du gaz d'échappement. Un injecteur Bosch Denoxtronix 2.2 a été utilisé. Un mixeur statique est incorporé à 5 cm après l'injecteur. A la fin du test les quantités en masse de dépôts dans le mixeur et dans le coude localisé après le mixeur sont quantifiées.

Les conditions de l'essai sont les suivantes :
- Pression de l'injecteur : 8 bar ;
- Débit de composition injectée : 920 g/h ;
- Débit d'air : 660 kg/h ;
- Durée de l'essai: 1h ;
- Température du gaz d'échappement au niveau de l'injecteur : 180 - 215°C.

Les résultats obtenus sont détaillés dans le tableau 2 ci-dessous.

**[Table 2]**

| Composition | % de réduction de dépôts par rapport à C0 |
|---|---|
| C1 (invention) | 26 |
| C2 (invention) | 29 |
| C3 (invention) | 23 |
| C4 (invention) | 25 |

Ces résultats montrent que les compositions selon l'invention permettent d'obtenir une réduction substantielle des dépôts générés par la cristallisation et/ou mauvaise décomposition de l'urée dans le système SCR.

### Tests de moussage :

Le niveau de moussage de ces différentes compositions a été déterminé au moyen d'un banc de moussage DFA100 commercialisé par la société Krüss.

Dans ce système, le moussage est généré par apport d'air ascendant, introduit au travers d'un verre fritté situé au bas d'une colonne contenant la composition à tester. Le dispositif permet la lecture directe du volume de mousse formé en fonction du temps.

Les mesures ont été effectuées à température ambiante (25°C), chaque fois après une durée d'injection d'air de 30 s, à un débit de 0,3 L/min. Le volume de composition introduit dans la colonne pour chaque essai est de 40 ml. Les volumes de mousse ont été mesuré 60 s après le démarrage de l'essai.

Chaque composition a été testée immédiatement après sa préparation

Les résultats obtenus sont détaillés dans le tableau 3 ci-dessous.

**[Table 3]**

| Composition | Volume de mousse |
|---|---|
| C1 (invention) | 148 ml |
| C2 (invention) | 158 ml |
| C3 (invention) | 6 ml |
| C4 (invention) | 9 ml |

Les résultats ci-dessus montrent que les compositions C3 et C4 permettent en outre de réduire substantiellement le moussage.

## Revendications

1. Composition aqueuse comprenant :
(1) au moins un agent réducteur des oxydes d'azote et/ou au moins un précurseur d'un tel agent, et
(2) au moins un additif choisi parmi les mono-esters d'acides gras comportant de 12 à 22 atomes de carbone et de sorbitan polyoxyéthylénés, en une teneur totale de 10 à 1500 ppm en masse par rapport à la masse totale de la composition,
cette composition ne contenant pas de paraffines.

2. Composition selon la revendication précédente, **caractérisée en ce que** l'agent réducteur ou le précurseur de l'agent réducteur (1) est choisi dans la liste constituée par l'urée, l'ammoniaque, le formamide, les sels d'ammonium, et les sels de guanidine; et de préférence dans la liste constituée par l'urée et l'ammoniaque ; et plus préférentiellement le précurseur de l'agent réducteur est l'urée.

3. Composition selon l'une quelconque des revendications précédentes, **caractérisée en ce que** la composition contient de l'urée, à une teneur allant de 25% à 42% en masse, de préférence de 30% à 40% en masse, plus préférentiellement de 31 à 35% en masse et mieux encore de 32% à 33% en masse, par rapport à la masse totale de la composition ; et plus préférentiellement encore de 32,5 ± 0,7% en masse, par rapport à la masse totale de la composition.

4. Composition selon l'une quelconque des revendications précédentes, **caractérisée en ce que** le ou les acide(s) gras desdits mono-esters (2) comprennent de 12 à 20 atomes de carbone, de préférence de 12 à 18 atomes de carbone.

5. Composition selon l'une quelconque des revendications précédentes, **caractérisée en ce que** lesdits mono-esters (2) comprennent un nombre moyen d'unités oxyéthylène (unités OE) compris dans la gamme allant de 10 à 30, et de préférence de 15 à 25, et plus préférentiellement de 20.

6. Composition selon la revendication précédente, **caractérisée en ce que** le ou les mono-ester(s) (2) sont choisis parmi le mono-laurate de sorbitan polyoxyéthyléné à 20 OE, le mono-oléate de sorbitan polyoxyéthyléné à 20 OE et leurs mélanges, et de préférence l'ester (2) est le mono-laurate de sorbitan polyoxyéthyléné à 20 OE.

7. Composition selon l'une quelconque des revendications précédentes **caractérisée en ce que** le ou les mono-esters (2) sont présents à une teneur totale de 50 à 1000 ppm en masse, de préférence de 200 à 800 ppm en masse, par rapport à la masse totale de la composition.

8. Composition selon l'une quelconque des revendications précédentes **caractérisée en ce qu'**elle comprend en outre un ou plusieurs additif(s) anti-mousse, de préférence choisi(s) parmi les polymères de polydiméthylsiloxanes greffés, et plus préférentiellement parmi les copolymères comprenant un squelette polydiméthylsiloxane avec un nombre moyen d'unités diméthylsiloxane compris dans la gamme de 150 à 300, greffé par des chaînes polyoxyalkylène.

9. Composition selon la revendication 8, **caractérisée en ce que** les chaînes polyoxyalkylène desdits copolymères répondent à la formule -(RO)ₘ- avec R désignant un ou plusieurs groupements alkylènes en C1 à C4 et m un nombre compris dans la gamme allant de 10 à 55, de préférence les chaînes polyoxyalkylène sont choisies parmi les polyoxyéthylène (EO), les polyoxypropopylènes (PO), et les chaînes formées de motifs oxyéthylène et de motifs oxypropylène (EO/PO), et plus préférentiellement encore parmi les chaînes formées de motifs oxyéthylène (EO) et de motifs oxypropylène (PO) avec un rapport du nombre moyen d'unités EO sur le nombre moyen d'unités PO de préférence compris dans la gamme allant de 0,2 à 2, plus préférentiellement de 0,3 à 1,3.

10. Composition selon l'une quelconque des revendications 8 et 9, **caractérisée en ce que** ledit copolymère est réticulé.

11. Composition selon l'une quelconque des revendications 8 à 10, **caractérisée en ce que** le ou les additif(s) anti-mousse sont présents à une teneur totale allant de 1 à 200 ppm en masse, de préférence de 2 à 100 ppm en masse, plus préférentiellement de 3 à 50 ppm en masse, mieux de 5 à 25 ppm en masse et mieux encore de 10 à 15 ppm en masse, par rapport à la masse totale de la composition.

12. Composition selon l'une quelconque des revendications 8 à 10, **caractérisée en ce qu'**elle ne comprend pas de composé(s) métallique(s).

13. Utilisation d'une composition telle que définie dans l'une quelconque des revendications précédentes pour le traitement des gaz d'échappement des moteurs à combustion interne embarqués ou stationnaires.

14. Utilisation d'une composition telle que définie dans l'une quelconque des revendications 1 à 12 pour prévenir ou réduire les dépôts dans la conduite qui achemine les gaz d'échappement de la sortie d'un moteur à combustion interne vers un dispositif de réduction catalytique sélective des oxydes d'azote.

15. Procédé de traitement des gaz d'échappement issus d'un moteur à combustion interne équipé d'un dispositif de réduction catalytique sélective des oxydes d'azote, **caractérisé en ce qu'**il comporte au moins une étape d'introduction d'une composition telle que définie dans l'une quelconque des revendications 1 à 12 dans la conduite qui achemine les gaz d'échappement de la sortie du moteur vers ledit dispositif de réduction catalytique sélective.
